# EUROPEAN PATENT APPLICATION

(11) **EP 2 128 301 A1**
(43) Date of publication of application: **02.12.2009**
(21) Application number: 08711253.8
(22) Date of filing: 14.02.2008
(51) Int. Cl.: C23C 8/20, C21D 1/06, C21D 1/74, C21D 1/773, G01N 21/73

(54) **CARBURIZING APPARATUS AND CARBURIZING METHOD**

(30) Priority: 23.02.2007 JP 2007043973
(71) Applicant: IHI Corporation, Tokyo 135-8710 (JP)
(72) Inventor: NAKAI, Hiroshi, Tokyo 135-8710 (JP); NAKABAYASHI, Takashi, Tokyo 135-8710 (JP)
(74) Representative: Lamb, Martin John Carstairs
(86) International application number: PCT/JP2008/052411
(87) International publication number: WO 2008/102684

(57) **Abstract**

A carburizing apparatus that performs a vacuum carburizing treatment with respect to an object includes: a carburizing furnace that contains the object; a gas supply apparatus that supplies a carburizing gas to the carburizing furnace; a light emitting device that emits light by using an in-furnace gas inside of the carburizing furnace which is supplied with the carburizing gas; a light receiving device that receives light emitted from the light emitting device; and a processing device that calculates the composition of the in-furnace gas based on the light receiving result of the light receiving device.

## Description

### [TECHNICAL FIELD]

The present invention relates to a carburizing apparatus and carburizing method.
Priority is claimed on Japanese Patent Application No. 2007-43973, filed February 23, 2007, the content of which is incorporated herein by reference.

### [BACKGROUND ART]

A vacuum carburization, which is performed under reduced pressure, has been conventionally known as one of the carburizing treatments that are used for surface treatment of steel.
The following Patent documents disclose part of examples of techniques related to the vacuum carburization.
Patent Document 1: Japanese Unexamined Patent Application, first publication No. 2001-081543
Patent Document 2: Japanese Unexamined Patent Application, first publication No. 2001-240954
Patent Document 3: Japanese Unexamined Patent Application, first publication No. 2001-262313
Patent Document 4: Japanese Unexamined Patent Application, first publication No. 2002-173759
Patent Document 5: Japanese Unexamined Patent Application, first publication No. 2002-212702
Patent Document 6: Japanese Unexamined Patent Application, first publication No. 2004-053507
Patent Document 7: Japanese Unexamined Patent Application, first publication No. 2004-059959
Patent Document 8: Japanese Unexamined Patent Application, first publication No. 2004-332075
Patent Document 9: Japanese Unexamined Patent Application, first publication No. 2005-350729
Patent Document 10: Japanese Unexamined Patent Application, first publication No. 2005-351761

### [DISCLOSURE OF THE INVENTION]

### [PROBLEM TO BE SOLVED BY THE INVENTION]

Conventionally, as one of the methods to confirm reproducibility of the vacuum carburization treatment, sampling inspections have been performed with respect to objects to be treated (steel) after being treated by the vacuum carburizing treatment. In particular, the vacuum carburizing treatment has been performed with respect to the objects to be treated by controlling, for example, various carburizing conditions (carburizing time, carburizing temperature, the amount of a carburizing gas supplied, or the like). The treatment has been followed by inspecting carburizing quality (surface carburization density, carburization density distribution, case hardness, effective case depth after carburizing, or the like) by sampling the objects to be treated after being treated by the vacuum carburizing treatment. The treatment has been further followed by confirming whether or not a desired carburizing quality has been obtained, or re-adjusting the carburizing conditions so as to obtain the desired carburizing quality.

However, with the above-described method, in order to obtain the desired carburizing quality, a cumbersome process is necessary, in which quality confirmation results of the objects to be treated with carburizing needs to be fed back in each case. Also, in the case where the amount of the carburizing gas is not appropriate with respect to the size of the objects to be treated with carburizing, the following problems occur. For example, in the case where the amount of the carburizing gas is too little with respect to the size of the objects to be treated with carburizing, the carburizing quality fluctuates because the amount of the carburizing gas which is supplied to surfaces of the objects to be treated with carburizing fluctuates. In contrast, in the case where the amount of the carburizing gas is too much with respect to the size of the objects to be treated with carburizing, soot is generated in a carburizing furnace due to excessive gas that does not contribute to the carburizing, and accordingly, maintenance work for getting rid of the soot is frequently necessary.

In order to perform the vacuum carburizing treatment with excellent reproducibility, it is preferable to control the composition of an in-furnace gas inside of the carburizing furnace. Accordingly, it is necessary to calculate the composition of the in-furnace gas immediately and accurately, use the calculated result, and perform appropriate treatments in order to have a desired composition of the in-furnace gas. However, conventionally, an effective method for calculating the composition of the in-furnace gas immediately and accurately has not been established. Accordingly, an effective method for calculating the composition of the in-furnace gas immediately and accurately has been demanded.

The present invention was achieved in view of the forgoing circumstances and has an objective to provide a carburizing apparatus and carburizing method that enables calculations of the composition of the in-furnace gas immediately and accurately and preferably perform the vacuum carburizing treatment with high reproducibility.

### [MEANS FOR SOLVING THE PROBLEM]

In order to solve the aforementioned problems, the present invention employs the following structures.
A first aspect of the present invention is a carburizing apparatus that performs a vacuum carburizing treatment with respect to an object. The carburizing apparatus includes: a carburizing furnace that contains the object; a gas supply apparatus that supplies a carburizing gas to the carburizing furnace; a light emitting device that emits light by using an in-furnace gas inside of the carburizing furnace which is supplied with the carburizing gas; a light-receiving device that receives light emitted from the light emitting device; and a processing device that calculates the composition of the in-furnace gas based on the light receiving result of the light receiving device.

In accordance with the first aspect of the present invention, since the light emitting device that emits light by using the in-furnace gas and the light-receiving device that receives light emitted from the light emitting device are provided, it is possible to optically calculate the composition of the in-furnace gas immediately and accurately based on the light receiving result of the light receiving device. Accordingly, by using the calculated result, it is possible to perform appropriate treatments in order to achieve desired composition of the in-furnace gas and preferably to perform the vacuum carburizing treatment with high reproducibility.

In the carburizing apparatus of the above aspect, a structure may be employed, in which the light emitting device emits light by using the in-furnace gas introduced to a detection space which is connected to an internal space of the carburizing furnace.

In accordance with the above structure, an exclusive detection space different from the internal space of the carburizing furnace for emitting light by the light emitting device is provided. Accordingly, it is possible to smoothly perform a light emitting operation using the light emitting device and a light receiving operation using the light-receiving device. Since the detection space is connected with the internal space of the carburizing furnace, the environment of the detection space corresponds to the internal space of the carburizing furnace. Accordingly, under the environment corresponding to the internal space of the carburizing furnace, it is possible to emit light by using the in-furnace gas.

In the carburizing apparatus of the above aspect, a structure may be employed, in which the light emitting device emits light by imparting energy to the in-furnace gas.

In accordance with the above structure, the light emitting device can emit light by forming the in-furnace gas into an excited state.

In the carburizing apparatus of the above aspect, a structure may be employed, in which the light emitting device generates plasma in a space which includes the in-furnace gas.

In accordance with the above structure, the light emitting device can emit light by forming the in-furnace gas into an excited state.

In the carburizing apparatus of the above aspect, a structure may be employed, in which the light emitting device emits a laser light into the in-furnace gas.

In accordance with the above structure, the light emitting device can emit light by forming the in-furnace gas into an excited state.

In the carburizing apparatus of the above aspect, a structure may be employed, in which the light receiving device detects intensity of the light emitted from the light emitting device.

In accordance with the above structure, since the light emitting device emits light having a predetermined wavelength and intensity corresponding to the composition of the in-furnace gas, it is possible to calculate the composition of the in-furnace gas accurately based on the light receiving result of the light receiving device.

In the carburizing apparatus of the above aspect, a structure may be employed, in which a control device is provided that controls at least one of an amount of the carburizing gas supplied per unit time by the gas supply apparatus or the carburizing time based on the composition of the in-furnace gas calculated by the processing device.

In accordance with the above structure, the control device can have a desired composition of the in-furnace gas and preferably perform the vacuum carburizing treatment with high reproducibility by controlling the amount of the carburizing gas per unit time supplied from the gas supply apparatus or by controlling the carburizing time based on the calculated composition of the in-furnace gas.

A second aspect of the present invention is a carburizing method which performs the vacuum carburizing treatment with respect to the object. The carburizing method includes: supplying the carburizing gas to the carburizing furnace that contains the object; causing an in-furnace gas existing inside of the carburizing furnace which is supplied with the carburizing gas to emit light; receiving the light which is emitted and; calculating the composition of the in-furnace gas based on the light receiving result.

In accordance with the second aspect of the present invention, since an operation which causes the in-furnace gas to emit light and an operation which receives the light which is emitted are performed, it is possible to optically calculate the composition of the in-furnace gas immediately and accurately based on the light receiving result. Accordingly, by using the calculated result, it is possible to perform appropriate treatments in order to have a desired composition of the in-furnace gas and preferably to perform the vacuum carburizing treatment with high reproducibility.

In the carburizing method of the above aspect, a structure may be employed, in which the operation which receives the light includes an operation which detects the intensity of the light received and further includes an operation which calculates the relationship in advance between the composition of the in-furnace gas and the intensity of the light which caused the in-furnace gas to emit light. Accordingly, it is possible to calculate the composition of the in-furnace gas based on the relationship and the light intensity of the detected light.

In accordance with the above method, by calculating the relationship between the composition of the in-furnace gas and the intensity of the light which the in-furnace gas emits in advance, it is possible to calculate the composition of the in-furnace gas accurately based on the relationship and the light intensity of the detected light.

### [EFFECT OF THE INVENTION]

In accordance with the present invention, it is possible to calculate the state of the in-furnace gas inside of the carburizing furnace immediately and accurately. Accordingly, it is possible to preferably perform the vacuum carburizing treatment with high reproducibility.

### [BRIEF DESCRIPTION OF THE DRAWINGS]

FIG. 1 is an outline block diagram showing a carburizing apparatus in accordance with a present embodiment.
FIG. 2 is an enlarged view showing the vicinity of a light emitting device and of a light receiving device.
FIG. 3A is a schematic view explaining the relationship between a carburizing condition and an in-furnace gas.
FIG. 3B is a schematic view explaining the relationship between a carburizing condition and an in-furnace gas.
FIG. 4 is a view showing an example of an emission spectrum developed based on a light receiving result of a light receiving device.
FIG. 5 is a view showing the relationship between the partial pressure ratio and the normalized value of the light emission intensity corresponding to the partial pressure ratio.
FIG. 6 is a schematic view showing an alternative example of a light emitting device.
FIG. 7 is a schematic view showing an alternative example of a light emitting device.
FIG. 8 is a schematic view showing an alternative example of a light emitting device.

### [BRIEF DESCRIPTION OF THE REFERENCE NUMERALS]

- 1: Carburizing apparatus
- 2: Carburizing furnace
- 3: Gas supply mechanism
- 4: Gas emission mechanism
- 5: Light emitting device
- 6: Light receiving device
- 7: Processing device
- 8: Control device
- 12: Treatment room (internal space)
- 15: Discharge room (detection space)

### [BEST MODE FOR CARRYING OUT THE INVENTION]

Hereinbelow, embodiments of the present invention shall be described with reference to the appended drawings. The present invention shall not be limited to the following embodiments, and structural elements of the embodiments may be arbitrarily combined for example.

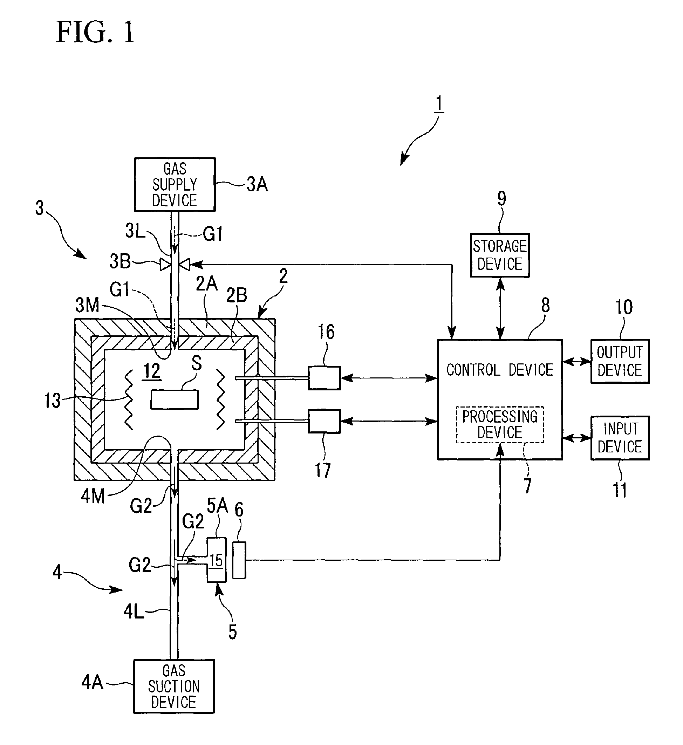

FIG. 1 is an outline block diagram showing a carburizing apparatus in accordance with the present embodiment. The present embodiment shall be described with a vacuum carburizing apparatus as an example of the carburizing apparatus, in which the carburizing apparatus performs a carburizing treatment under reduced pressure (below atmospheric pressure) with respect to objects to be treated such as steel.

In FIG. 1, a carburizing apparatus 1 is provided with: a carburizing furnace 2 that contains an object to be treated S such as a steel which is to be treated with a vacuum carburizing treatment; a gas supply mechanism 3 that supplies carburizing gas G1 to the carburizing furnace 2; a gas emission mechanism 4 that emits to the outside an in-furnace gas G2 which exists inside of the carburizing furnace 2 and is supplied with the carburizing gas G1; a light emitting device 5 that emits light by using the in-furnace gas G2 existing inside of the carburizing furnace 2 which is supplied with the carburizing gas G1; a light receiving device 6 that receives light emitted from the light emitting device 5; a processing device 7 that calculates the composition of the in-furnace gas G2 based on the light receiving result of the light receiving apparatus 6; and a control device 8 that controls the whole operation of the carburizing apparatus 1. To the control device 8, a storage device 9 that stores each piece of information about the carburizing treatment; an output device 10 that is capable of outputting information about the carburizing treatment; and an input device 11 that is capable of inputting operational signals to the control device 8 are connected. The output device 10 may be a display, a printer, or the like. The input device 11 may be a keyboard, a mouse, or the like.

The carburizing furnace 2 has an internal space (treatment room) 12 where the object to be treated S is disposed. The carburizing furnace 2 has a furnace wall 2A and an adiabatic wall 2B. The treatment room 12 is formed inside of the adiabatic wall 2B.

The gas supply mechanism 3 supplies the carburizing gas G1 to the treatment room 12 of the carburizing furnace 2. The gas supply mechanism 3 is provided with: a gas supply device 3Athat is capable of sending the carburizing gas G1; an air supply opening 3M that is formed in part of the treatment room 12; and an air supply pipe 3L that connects the gas supply device 3A and the air supply opening 3M. The gas supply mechanism 3 is provided with an adjustment mechanism 3B that adjusts the amount of the carburizing gas G1 supplied per unit time to the treatment room 12. The adjustment mechanism 3B includes a bulb mechanism and is connected to the control device 8. The control device 8 can adjust the amount of the carburizing gas G1 supplied by the gas supply mechanism 3 per unit time to the treatment room 12 by controlling the adjustment mechanism 3B.

The carburizing gas G1, which includes a predetermined hydrocarbon system gas, is a gas that is supplied to the treatment room 12 so as to perform the vacuum carburizing treatment on the object to be treated S. In the present embodiment, the gas supply mechanism 3 supplies acetylene (C₂H₂) to the treatment room 12 as the carburizing gas G1.

The gas emission mechanism 4 emits the in-furnace gas G2, existing inside of the treatment room 12 of the carburizing furnace 2 where the carburizing gas G1 is supplied, to the outside of the treatment room 12. The gas emission mechanism 4 includes a vacuum system such as a vacuum pump or the like and is provided with: a gas suction device 4A that can suction gas; an exhaust opening 4M that is formed in part of the treatment room 12; and an exhaust pipe 4L that connects the gas suction device 4A to the exhaust opening 4M.

The in-furnace gas G2 is a gas which was supplied to the treatment room 12 by the gas supply mechanism 3. The in-furnace gas G2 includes at least one of the following gases: the gas (reaction gas) which is left after the carburizing gas G1 is chemically reacted (carburizing reaction) in the treatment room 12 by the carburizing treatment, or the gas (non-reaction gas) which is the carburizing gas which is not used for the carburizing treatment and hasn't cause the carburizing reaction. For example, in accordance with the carburizing condition, there is a case, in which not all of the carburizing gas G1 supplied to the treatment room 12 is used for the carburizing reaction. In this case, there exists both the gas (reaction gas) used for the carburizing treatment and the gas (non-reaction gas) not used for the carburizing treatment in the treatment room 12. The gas which is emitted from the treatment room 12 includes both the reaction gas and the non-reaction gas.

As described above, in the present embodiment, acetylene (C₂H₂) is supplied in the treatment room 12 as the carburizing gas G1. The part of the acetylene supplied to the treatment room 12 which caused carburizing reaction with the object to be treated S generates a carbon component and a hydrogen component. That is, the carburizing reaction of the present embodiment is represented by C₂H₂ →H₂ + 2C. The carbon component generated by the carburizing reaction permeates (carburize) the surface of the object to be treated S and the hydrogen is emitted from the treatment room 12. That is, in the present embodiment, a main component of the reaction gas after the carburizing gas G1 causing the carburizing reaction is hydrogen gas. Also, in the present embodiment, a main component of the non-reaction gas which was not used for the carburizing treatment and did not cause the chemical reaction is acetylene.

The light emitting device 5 emits light by using the in-furnace gas G2. The light emitting device 5 emits light by using the in-furnace gas G2 which is introduced to a detection space 15 which is connected to the treatment room 12 of the carburizing furnace 2. The light emitting device 5 is provided with a discharge member 5A that has an internal space (detection space, discharge room) 15 which is connected to the midstream of the exhaust pipe 4L and an electrode which is disposed in the discharge room 15 of the discharge member 5A that generates plasma in the discharge room 15. The discharge member 5A can be made of a discharge tube (for example, a Geissler tube). The exhaust pipe 4L and the discharge room 15 are connected and the treatment room 12 and the discharge room 15 are connected via the exhaust pipe 4L. At least part of the in-furnace gas G2 which is emitted from the treatment room 12 and flows in the exhaust pipe 4L is introduced to the discharge room 15. The light emitting device 5 generates plasma in the discharge room 15 where the in-furnace gas G2 is introduced. The light emitting device causes the in-furnace gas G2 to emit light by generating plasma. As described above, in the present embodiment, the light emitting device 5 can emit light by using the in-furnace gas G2 which is introduced to the discharge room 15 which is connected to the treatment room 12 of the carburizing furnace 2.

The light receiving device 6 receives light emitted from the light emitting device 5. The light receiving device 6 includes a spectroscope disposed in the vicinity of the discharge member 5A of the light emitting device 5. The light receiving device 6 including the spectroscope can detect the light intensity and the emission spectrum of the light emitted from the discharge member 5A of the light emitting device 5. The light receiving device 6 is connected to the processing device 7 (control device 8) and detection result (light receiving result) of the light receiving device 6 is output to the processing device 7 (control device 8).

The processing device 7 is provided with a CPU or the like and is capable of performing a predetermined arithmetic processing, various information processing, or the like. The light receiving result of the light receiving device 6 is output to the processing device 7. The processing device 7 can calculate the composition of the in-furnace gas G2 based on the light receiving result of the light receiving device 6.

The carburizing apparatus 1 is provided with a temperature adjustment device 13 which can adjust at least one of the temperature of the treatment room 12 or the temperature of the object to be treated S which is contained in the treatment room 12. At least part of the temperature adjustment device 13 is disposed in the treatment room 12. The temperature adjustment device 13 includes a heating device (heater). The control device 8 can control (heat) the temperature of the treatment room 12 and the object to be treated S which is contained in the treatment room 12 to a predetermined temperature by controlling the temperature adjustment device 13 including the heating device. Also, the carburizing apparatus 1 is provided with a temperature sensor 16 which can detect the temperature of the treatment room 12. At least part of the temperature sensor 16 (a probe or the like) is disposed in the treatment room 12. The temperature sensor 16 is connected to the control device 8 and a detection result of the temperature sensor 16 is output to the control device 8. The control device 8 can adjust the temperature of the treatment room 12 to a predetermined temperature by controlling the temperature adjustment device 13 including the heating device based on the detection result of the temperature sensor 16.

The control device 8 can adjust (reduce) the pressure of the treatment room 12 by controlling the gas suction device 4A including the vacuum system. The carburizing apparatus 1 is provided with a pressure sensor 17 which can detect the pressure of the treatment room 12. At least part of the pressure sensor 17 (probe or the like) is disposed in the treatment room 12. The pressure sensor 17 is connected to the control device 8 and a detection result of the pressure sensor 17 is output to the control device 8. The control device 8 can adjust the pressure of the treatment room 12 to a desired pressure by controlling the gas suction device 4A including the vacuum system based on the detection result of the pressure sensor 17.

Next, an operation of the carburizing apparatus 1 having the above-described structure shall be described. In order to perform the vacuum carburizing treatment with respect to the object to be treated S, the control device 8 heats the treatment room 12 of the carburizing furnace 2 which contains the object to be treated S by using the temperature adjustment device 13. At the same time, the control device 8 reduces the pressure (increase vacuum) of the treatment room 12 by suctioning the gas in the treatment room 12 by using the gas emission mechanism 4. After the treatment room 12 is set to a predetermined heating state and pressure reduced state, the control device 8 supplies a predetermined amount of the carburizing gas G1 per unit time from the gas supply mechanism 3 with respect to the treatment room 12 of the carburizing furnace 2 which contains the object to be treated S. The control device 8 performs the vacuum carburizing treatment with respect to the object to be treated S for a predetermined time while the control device supplying the predetermined amount of the carburizing gas G1 per unit time from the gas supply mechanism 3 to the treatment room 12, emitting the gas in the treatment room 12 from the gas emission mechanism 4, and maintaining a predetermined heating state and pressure reduced state of the treatment room 12.

The in-furnace gas G2 in the treatment room 12 is emitted via the exhaust opening 4M and flows in the exhaust pipe 4L. Part of the in-furnace gas G2 flowing in the exhaust pipe 4L flows toward to the gas suction device 4A and another part of the in-furnace gas G2 flows into the discharge room 15 of the light emitting device 5. The control device 8 causes the in-furnace gas G2 to emit light by using the light emitting device 5.

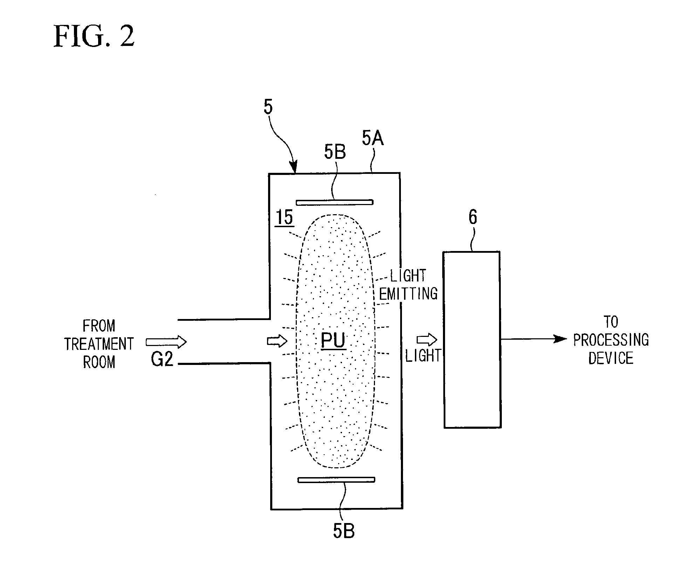

FIG. 2 is an enlarged view showing the vicinity of the light emitting device 5 and the light receiving device 6. As shown in FIG. 2, the light emitting device 5 is provided with the discharge member 5A having the discharge room 15 and electrodes 5B that are disposed in the discharge room 15 of the discharge member 5A and generate plasma in the discharge room 15. The light emitting device 5 generates plasma in the discharge room 15. The in-furnace gas G2 emitted from the treatment room 12 is introduced into the discharge room 15 and is supplied to a plasma generation area PU, in which plasma is generated, in the discharge room 15. The light emitting device 5 causes the in-furnace gas G2 to emit light by generating plasma.

The light receiving device 6 receives light, which is emitted by the in-furnace gas G2 inside the light emitting device 5. The detection result (light receiving result) of the light receiving device 6 is output to the processing device 7. The processing device 7 calculates the composition of the in-furnace gas G2 based on the light receiving result of the light receiving device 6. In the present embodiment, the vacuum carburizing treatment with respect to the object to be treated S in the treatment room 12, the light emitting operation by the light emitting device 5, and the light receiving operation by the light receiving device 6 are performed in parallel. That is, while the vacuum carburizing treatment is performed with respect to the object to be treated S, the light receiving operation by the light receiving device 6 and the processing operation by the processing device 7 (operation that calculates the composition of the in-furnace gas G2) based on the light receiving result are performed in real time.

The control device 8 controls, by using the adjustment mechanism 3B, the amount of the carburizing gas G1 supplied per unit time with respect to the treatment room 12 by the gas supply mechanism 3 based on the composition of the in-furnace gas G2 which is calculated by the processing device 7. That is, in the present embodiment, the control device 8 controls in real time a supply operation of the carburizing gas G1 with respect to the treatment room 12 (control the adjustment mechanism 3B) by the gas supply mechanism 3 based on the composition of the in-furnace gas G2 which is calculated by the processing device 7 while the vacuum carburizing treatment is performed with respect to the object to be treated S.

Next, an operation, in which the processing device 7 calculates the composition of the in-furnace gas G2 based on the light receiving result of the light receiving device 6, shall be described.

As described above, the in-furnace gas G2 includes the reaction gas, which is left after the carburizing gas G1 causing the carburizing reaction in the treatment room 12 and the non-reaction gas which is not used for the carburizing treatment and has not caused the carburizing reaction. In the present embodiment, the in-furnace gas G2 includes hydrogen as the reaction gas and acetylene as the non-reaction gas.

In the present embodiment, the gas supply mechanism 3 supplies the predetermined amount of the carburizing gas G1 per unit time to the treatment room 12. However, in accordance with various carburizing conditions such as carburizing time, carburizing temperature, the supply amount of the carburizing gas, or the like, the amount of the carbon component permeated the object to be treated S, in other words, a reaction speed of the carburizing reaction might fluctuate. When the amount of the carbon component that permeates the object to be treated S changes, the amount of the reaction gas (hydrogen gas) in the treatment room 12 changes in correspondence therewith.

Here, carburizing time means elapsed time since the carburizing treatment started. Carburizing temperature means the temperature of the treatment room 12, in which the carburizing treatment is performed. The supply amount of the carburizing gas means the amount of the carburizing gas G1 supplied per unit time with respect to the treatment room 12.

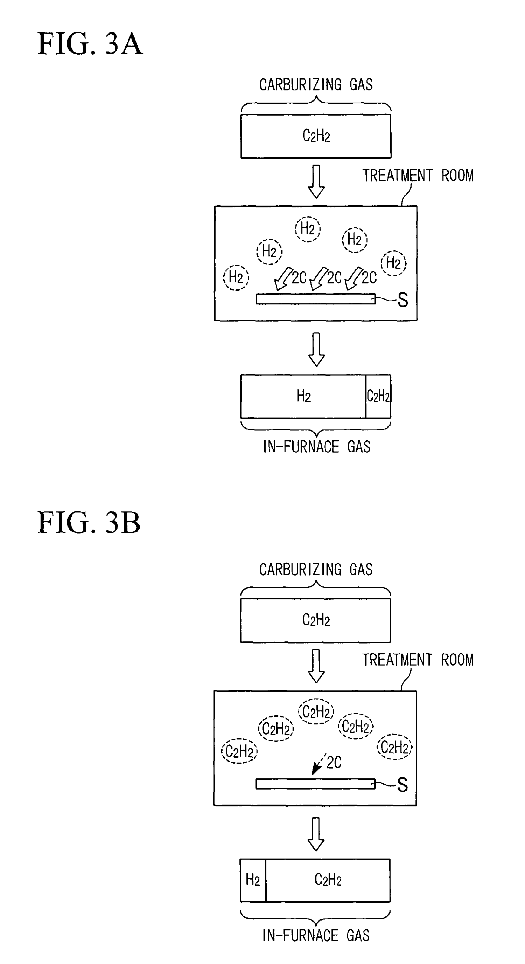

For example, as shown in a schematic view of FIG. 3A, in the case where carburizing time is short and the amount of the carbon component at the surface of the object to be treated S (the amount of carbon already permeated at the surface of the object to be treated S) is low, there is enough room for the carbon component to permeate the surface of the object to be treated S. In this case, from the acetylene supplied to the treatment room 12, most of the acetylene is used for the carburizing reaction and the amount of carbon component which permeates the object to be treated S (reaction speed of the carburizing reaction) increases. In this case, the gas in the treatment room 12 and the in-furnace gas G2 emitted from the treatment room 12 include a lot of the reaction gas (hydrogen gas).

On the other hand, as shown in a schematic view of FIG. 3B, in a case where the carburizing time is long and the amount of the carbon component at the surface of the object to be treated S (the amount of carbon already permeated at the surface of the object to be treated S) is high, in other words, the amount of carbon component capable of permeating the surface of the object to be treated S has almost reached a saturated state, there is little room for the carbon component to permeate the surface of the object to be treated S. In this case, from the acetylene supplied to the treatment room 12, most of the acetylene is not used for the carburizing reaction and the amount of carbon component which permeates the object to be treated S (reaction speed of the carburizing reaction) decreases. In this case, the gas in the treatment room 12 and the in-furnace gas G2 emitted from the treatment room 12 include a lot of the non-reaction gas (acetylene).

As described above, in accordance with carburizing time, the composition of the in-furnace gas G2 changes. In accordance with not only carburizing time, but also with the carburizing conditions such as carburizing temperature, the amount of the carburizing gas supplied per unit time to the treatment room 12, or the like, the composition of the in-furnace gas G2 changes. That is, in accordance with the carburizing conditions such as carburizing time, the carburizing temperature, the amount of the carburizing gas supplied per unit time, or the like, the composition of the in-furnace gas G2 changes.

In accordance with the composition of the in-furnace gas G2, the state of the light changes at the time when the in-furnace gas G2 inside the light emitting device 5 emits light. In particular, in accordance with the composition of the in-furnace gas G2, the light intensity and the emission spectrum change at the time when the in-furnace gas G2 emits light inside the light emitting device 5. For example, when the in-furnace gas G2, having the composition shown in FIG. 3A (the composition with a lot of hydrogen), inside the light emitting device 5 emits light, an emission spectrum having a peak intensity derived from hydrogen is obtained. Also, when the in-furnace gas G2, having the composition shown in FIG. 3B (the composition with a lot of acetylene), emits light inside the light emitting device 5, the emission spectrum having a peak intensity derived from acetylene is obtained.

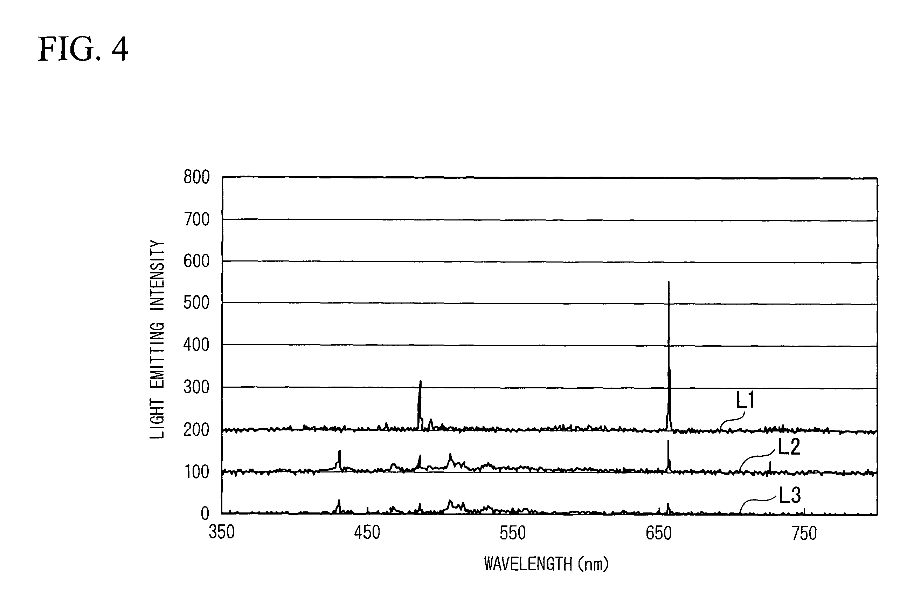

FIG. 4 is a view showing the emission spectrum developed based on the light receiving result of the light receiving device 6. In FIG. 4, the horizontal axis represents a wavelength and the vertical axis represents emission intensity. In FIG. 4, the line L1 shows the emission spectrum when the partial pressure ratio of hydrogen with respect to the total pressure of the in-furnace gas G2 (the total pressure of the treatment room 12) is 1. That is, the line L1 shows the emission spectrum in the case where, from the acetylene supplied to the treatment room 12, all the acetylene is used for the carburizing reaction and all the in-furnace gas G2 (the in-furnace gas G2 emitted from the treatment room 12) in the treatment room 12 is hydrogen gas.

Also, in FIG. 4, the line 2 shows the emission spectrum when the partial pressure ratio of hydrogen with respect to the total pressure of the in-furnace gas G2 (total pressure of the treatment room 12) is 0.56. That is, the line L2 shows the emission spectrum in the case where, among acetylene supplied to the treatment room 12, about half the acetylene is used for the carburizing reaction and about half the in-furnace gas G2 (the in-furnace gas G2 emitted from the treatment room 12) in the treatment room 12 is hydrogen gas.

Also, in FIG. 4, the line L3 shows the emission spectrum when the partial pressure ratio of hydrogen with respect to the total pressure of the in-furnace gas G2 (total pressure of the treatment room 12) is 0. That is, the line L3 shows the emission spectrum in the case where, among acetylene supplied to the treatment room 12, all the acetylene is not used for the carburizing reaction and all the in-furnace gas G2 (the in-furnace gas G2 emitted from the treatment room 12) in the treatment room 12 is acetylene.

As described above, in accordance with the composition of the in-furnace gas G2, the light receiving result of the light receiving device 6, which receives light emitted from the light emitting device 5 which emits light by using the in-furnace gas G2, changes.

Accordingly, the processing device 7 can calculate the partial pressure ratio of hydrogen with respect to the total pressure of the in-furnace gas G2 based on the light receiving result of the light receiving device 6. Since the partial pressure ratio of hydrogen with respect to the total pressure of the in-furnace gas G2 corresponds to the composition of the in-furnace gas G2, the processing device 7 can calculate the composition of the in-furnace gas G2 based on the light receiving result of the light receiving device 6.

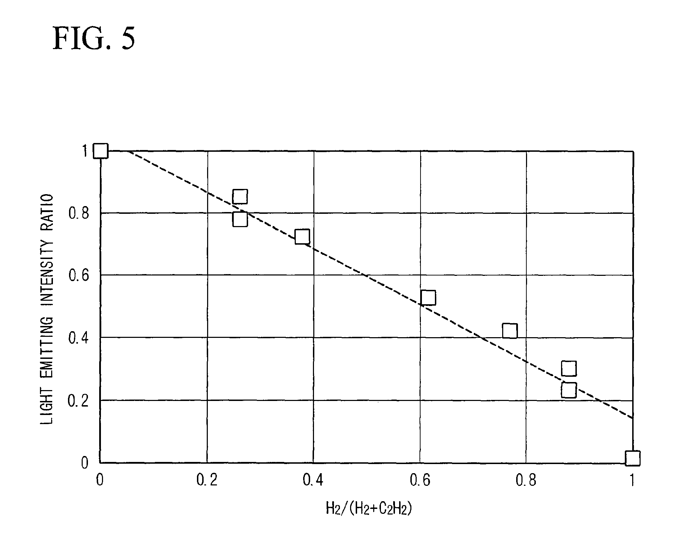

FIG. 5 is plotted with a horizontal axis representing the partial pressure ratio of hydrogen with respect to the total pressure of the in-furnace gas G2 and a vertical axis representing the light receiving result (the peak intensity of a hydrocarbon derived from acetylene with respect to the peak intensity derived from hydrogen). Accordingly, it is understood that the composition of the in-furnace gas G2 and the light receiving result correlate.

In the present embodiment, the relationship between the composition of the in-furnace gas G2 and the light intensity when the in-furnace gas G2 emits light is stored in advance in the storage device 9. Here, this relationship can be obtained from, for example, at least one of a preliminary experiment or a simulation for example and can be stored in the storage device 9. In the present embodiment, the relationship between the partial pressure ratio of hydrogen (or the composition of the in-furnace gas G2) with respect to the total pressure of the in-furnace gas G2 and normalized value of light emission intensity corresponding to the partial pressure ratio (composition), as shown in FIG. 5, is stored in advance in the storage device 9. Here, for the light emission intensity, the ratio between the peak intensity derived from hydrogen and the peak intensity of hydrocarbon derived from acetylene is preferably used. For a simplified case, the peak intensity derived from hydrogen may be used.

The control device 8 controls, by using the adjustment mechanism 3B, the amount of the carburizing gas G1 supplied per unit time by the gas supply mechanism 3 based on the composition of the in-furnace gas G2 which is calculated by the processing device 7.

It is considered that the carburizing quality of the object to be treated S (the surface carburizing density, the carburization density distribution, the case hardness, the effective case depth after carburizing (carburized depth), or the like) changes corresponding to the composition of the in-furnace gas G2 (atmosphere of the treatment room 12). In other words, since it is considered that the carburizing quality of the object to be treated S and the composition of the in-furnace gas G2 correlate, the control device 8 adjusts the amount of the carburizing gas G1 supplied per unit time by the gas supply mechanism 3. Here, the adjustment is performed based on the composition of the in-furnace gas G2 calculated by the processing device 7 based on the light receiving result of the light receiving device 6 so as to optimize the composition (such as acetylene density) of the in-furnace gas G2, in other words, in order to obtain the composition of the in-furnace gas G2 in which desired carburizing quality is obtained. Accordingly, it is possible to obtain a desired state in the composition of the in-furnace gas G2 and to preferably perform the vacuum carburizing treatment with high reproducibility.

Also, as described above, the carburizing condition includes not only the amount of the carburizing gas G1 supplied per unit time by the gas supply mechanism 3 but also the carburizing time, the carburizing temperature, or the like. Accordingly, the control device 8 can obtain a desired state in the carburizing quality with respect to the object to be treated S by also adjusting the carburizing time, the carburizing temperature, or the like as the carburizing condition based on the calculated composition of the in-furnace gas G2. Also, the control device 8 may adjust the composition of the carburizing gas G1, which is supplied to the treatment room 12 from the gas supply mechanism 3, based on the calculated composition of the in-furnace gas G2.

As described above, it is possible to calculate the composition of the in-furnace gas G2 immediately and accurately in real time since the composition of the in-furnace gas G2 inside of the carburizing furnace 2 is calculated optically.

In the present embodiment, it is possible to calculate the composition of the in-furnace gas G2 optically and fast (with good response). Since the structure of the present embodiment can be made with relatively lower cost compared to a conventional sensor capable of detecting, for example, the hydrogen density, and is provided with good sensitivity, it is suitable for a feedback control and it is possible to improve the controllability thereof.

In the present embodiment, the carburizing apparatus is the vacuum carburizing apparatus and the treatment room 12 of the carburizing furnace 2 has a high vacuum. Accordingly, it is possible to make the detection space 15 which is connected to the treatment room 12 in high vacuum without providing a new (another) vacuum system for increasing the vacuum of the detection space (discharge room) 15. Therefore, it is preferable to generate plasma in the detection space 15 having a high vacuum.

The detection space 15 and the treatment room 12 of the carburizing furnace 2 are connected; accordingly it is possible to make the detection space 15 and the treatment room 12 of the carburizing furnace 2 have substantially the same environment (atmosphere). Therefore, it is possible to calculate the composition of the in-furnace gas G2 accurately since it is possible to emit light by using the in-furnace gas G2 in the detection space 15 which has substantially the same environment as the treatment room 12.

Based on the calculated composition of the in-furnace gas G2, among the carburizing conditions, by adjusting in particular the amount of the carburizing gas G1 supplied per unit time with respect to the treatment room 12, it is possible to obtain a desired composition of the in-furnace gas G2. That is, the present embodiment calculates the composition of the in-furnace gas G2 in real time by using the light emitting device 5, the light receiving device 6, the processing device 7, and the like. Based on the calculated result, it is possible to implement a feedback control which adjusts the amount of the carburizing gas G1 supplied per unit time with respect to the treatment room 12 for optimizing the carburizing condition so as to obtain a desired carburizing quality. Accordingly, it is preferable to perform the vacuum carburizing treatment with respect to the object to be treated S with high reproducibility. Therefore, it is possible to obtain the object to be treated S with a desired carburizing quality.

In the present embodiment, it is preferable to control the carburizing condition to obtain a desired carburizing quality and so it is possible to perform the treatment with respect to the object to be treated S with the desired carburizing quality. Also, in the present embodiment, it is possible to prevent problems such as generation of the soot in the carburizing furnace or the like from happening and so it is possible to simplify the maintenance work of the carburizing furnace.

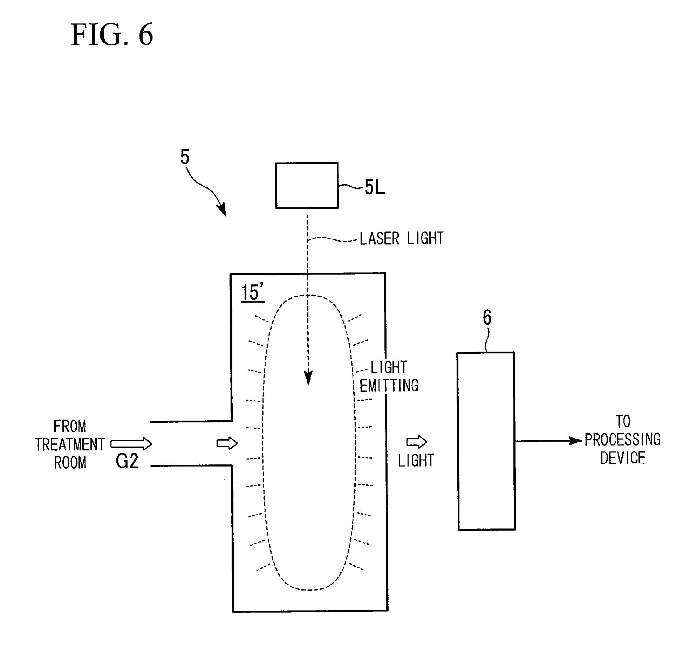

In the present embodiment, the light emitting device 5 causes the in-furnace gas G2 to emit light by generating plasma in the detection space (discharge room) 15 which includes the in-furnace gas G2, giving energy to the in-furnace gas G2, and forming the in-furnace gas G2 into an excited state. However, the light emitting device 5 may be provided with a laser light emitting device 5L which is capable of emitting a laser light into a detection room 15' to which the in-furnace gas G2 is introduced as shown in a schematic view of FIG. 6. The detection room 15' is connected to the treatment room 12 via the exhaust pipe 4L. The in-furnace gas G2 is introduced to the detection room 15'. The detection room 15' is made of a transparent object that transmits laser light. The light emitting device 5 can cause the in-furnace gas G2 to emit light by emitting a laser light into the in-furnace gas G2 from the laser light emitting device 5L and giving energy to the in-furnace gas G2. That is, since the in-furnace gas G2 becomes an excited state and emits light by being emitted with a laser, the light emitting device 5 can emit light by using the in-furnace gas G2 by also emitting a laser light into the in-furnace gas G2.

The light emitting device 5 may emit light by using other methods such as burning the in-furnace gas G2 or the like as long as it is possible to emit light by giving energy to the in-furnace gas G2.

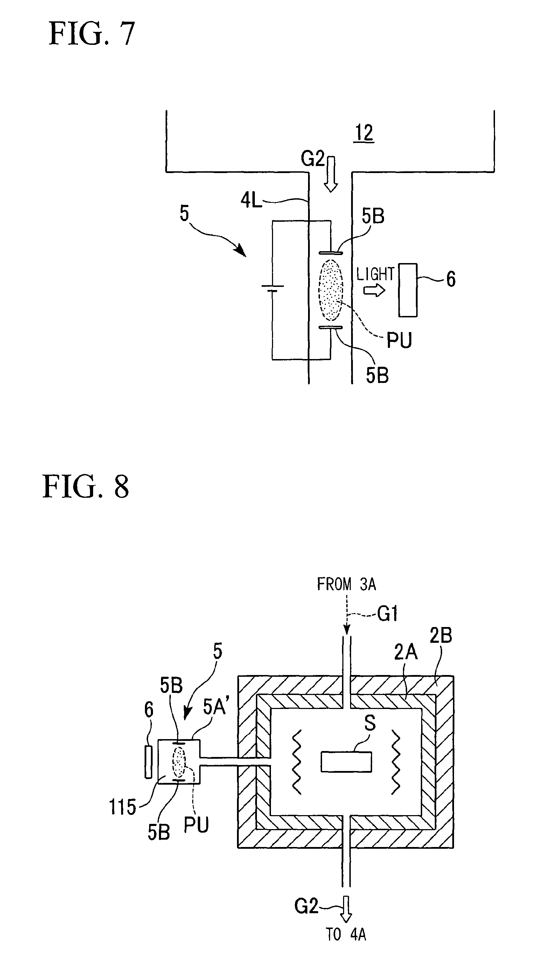

In the above-described embodiment, the space 15 (15') is branched from the midstream of the exhaust pipe 4L. However, as shown in FIG. 7, the electrodes 5B for generating plasma may be disposed in the midstream of the exhaust pipe 4L and the light generated by plasma may be received by the light receiving device 6 via a transmissive window which is disposed in a predetermined position of the exhaust pipe 4L. Also, the transmissive window may be disposed in the midstream of the exhaust pipe 4L and the laser light may be emitted into the in-furnace gas G2 via the transmissive window.

In the present embodiment, the light emitting device 5 emits light by using the in-furnace gas G2 flowing in the exhaust pipe 4L. However, as shown in FIG. 8 for example, a detection member 5A' forming an exclusive detection space 115, which is connected to the treatment room 12 of the carburizing furnace 2, may be provided and so the light emitting device 5 may emit light by using the in-furnace gas G2 which is introduced to the detection space 115.

## Claims

1. A carburizing apparatus that performs a vacuum carburizing treatment with respect to an object comprising:
a carburizing furnace that contains the object;
a gas supply apparatus that supplies a carburizing gas to the carburizing furnace;
a light emitting device that emits light by using an in-furnace gas inside of the carburizing furnace which is supplied with the carburizing gas;
a light receiving device that receives light emitted from the light emitting device; and
a processing device that calculates the composition of the in-furnace gas based on the light receiving result of the light receiving device.

2. The carburizing apparatus according to Claim 1, wherein
the light emitting device emits light by using the in-furnace gas which is introduced to a detection space connected to an internal space of the carburizing furnace.

3. The carburizing apparatus according to Claim 1, wherein
the light emitting device emits light by imparting energy to the in-furnace gas.

4. The carburizing apparatus according to Claim 3, wherein
the light emitting device generates plasma in a space which includes the in-furnace gas.

5. The carburizing apparatus according to Claim 3, wherein
the light emitting device emits a laser light into the in-furnace gas.

6. The carburizing apparatus according to Claim 1, wherein
the light receiving device detects the light intensity emitted from the light emitting device.

7. The carburizing apparatus according to Claim 1, further comprising:
a control device that controls at least one of an amount of the carburizing gas supplied per unit time by the gas supply apparatus or a carburizing time based on the composition of the in-furnace gas calculated by the processing device.

8. A carburizing method that performs a vacuum carburizing treatment with respect to an object comprising:
supplying a carburizing gas to a carburizing furnace that contains the object;
causing an in-furnace gas existing inside of the carburizing furnace which is supplied with the carburizing gas to emit light;
receiving the light which is emitted; and
calculating a composition of the in-furnace gas based on the light receiving result.

9. The carburizing method according to Claim 8, wherein the receiving the light further comprising detecting intensity of the light received; and the carburizing method further comprising:
calculating the relationship in advance between the composition of the in-furnace gas and the intensity of the light which caused the in-furnace gas to emit light; and
calculating the composition of the in-furnace gas based on the relationship and
the light intensity which is detected.
